(19) **Europäisches Patentamt**

**European Patent Office**

**Office européen des brevets**

(11) **EP 1 482 236 A1**

(12) **EUROPÄISCHE PATENTANMELDUNG**

(43) Veröffentlichungstag:
**01.12.2004 Patentblatt 2004/49**

(51) Int Cl.⁷: **F16L 59/14**, F16L 59/125

(21) Anmeldenummer: **04290908.5**

(22) Anmeldetag: **05.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **30.04.2003 DE 10319387**

(71) Anmelder: **Nexans**
**75008 Paris (FR)**

(72) Erfinder:
• **Schippl, Klaus**
**30659 Hannover (DE)**
• **Lange, Stephan**
**30900 Wedemark (DE)**

(74) Vertreter: **Döring, Roger, Dipl.-Ing.**
**Patentanwalt,**
**Weidenkamp 2**
**30855 Langenhagen (DE)**

(54) **Flexible Leitung**

(57) Bei einer flexiblen Leitung zum Befördern von kryogenen Fließmedien, bestehend aus einem metallischen Innenrohr (1), einem schraubenlinienförmig auf das Innenrohr (1) gewickelten streifenförmigen Abstandshalter (3) aus einem Material geringer Wärmeleitfähigkeit sowie einem metallischen Außenrohr (2) und bei der Abstandshalter (3) sowohl das Innenrohr (1) als auch das Außenrohr (3) kontaktiert, ist der streifenförmige Abstandshalter (3) um seine eigene Achse verdrillt und besteht aus einem gegen energiereiche Strahlung beständigen Metall mit einer Wärmeleitfähigkeit von weniger als 25 W/m.K und einer Festigkeit von mehr als 240 Mpa.

EP 1 482 236 A1

**Beschreibung**

Die Erfindung betrifft eine flexible Leitung zum Befördern von kryogenen Fließmedien nach dem Oberbegriff des Anspruchs 1.

Aus der US-PS 3 332 446 ist ein Leitungsrohr bekannt, welches aus einem ein kryogenes Medium führenden metallischen Innenrohr, einem konzentrisch und im Abstand zum Innenrohr angeordneten Außenrohr sowie einem Abstandshalter besteht. Der Abstandshalter ist ein bandförmiges Element, welches schraubenlinienförmig auf das Innenrohr aufgewickelt ist und sowohl das Innenrohr als auch das Außenrohr über die gesamte Länge des Leitungsrohres kontaktiert. Der Abstandshalter liegt mit einer seiner Schmalseiten auf dem Innenrohr und berührt mit seiner dem Innenrohr abgekehrten Schmalseite das Außenrohr. Der Abstandshalter besteht aus einem schlecht wärmeleitenden Kunststoffmaterial wie beispielsweise Polyethylen.

Aus der DE 1 936 609 B2 ist eine flexible Leitung zum Befördern von kryogenen Fließmedien bekannt, welche aus einem Innenrohr, einem auf das Innenrohr schraubenlinienförmig aufgewickelten Abstandshalter, einer mit gegenläufiger Wicklungsrichtung auf den Abstandshalter aufgewickelten Kühlleitung, einer über der Kühlleitung befindlichen konzentrisch zum Innenrohr angeordneten Zwischenhülle aus Metall, einem auf der Zwischenhülle befindlichen schraubenlinienförmig aufgewickelten Abstandshalter, sowie einem Außenrohr besteht. Zwischen der Zwischenhülle und dem Außenrohr ist noch eine thermische Isolierschicht aus mehreren Lagen metallisierter Kunststofffolien vorgesehen.

Für den Transport kryogener Fließmedien in der Nähe von z. B. Kernkraftanlagen oder von radioaktiven Materialien sind die bekannten Leitungsrohre nicht einsetzbar, da sie Stoffe enthalten, welche im Einflußbereich energiereicher Strahlung über längere Zeiträume nicht beständig sind.

Der vorliegenden Erfindung liegt die Aufgabe zugrunde, ein Leitungsrohr für den kryogenen Transport von Fließmedien bereitzustellen, welches zumindest über einen Zeitraum von zwei Jahren voll funktionsfähig bleibt, und bei welchem stärkere Verluste durch Wärmeeinfall in das Fließmedium ebenfalls über einen längeren Zeitraum vermieden sind.

Diese Aufgabe wird durch das im Kennzeichen des Anspruchs 1 Erfaßte gelöst.

Die wesentlichen Vorteile der Erfindung bestehen darin, daß durch die Verdrillung des band- oder streifenförmigen Abstandshalters dieser lediglich an in Längsrichtung des Leitungsrohres beabstandeten Stellen am Innen- und Außenrohr anliegt und dort den Abstand zwischen den Rohren festlegt. Das bedeutet, daß nur an diesen Stellen eine Wärmeleitung von Außenrohr zum Innenrohr stattfindet.

Dadurch, daß ein Material verwendet wird, welches gegen energiereiche Strahlung über einen längeren Zeitraum beständig ist, ist ein Auswechseln der Leitungsrohre lediglich nach Ablauf eines längeren Zeitraumes erforderlich.

Bei der Auswahl des Werkstoffes für den Abstandshalter ist eine Optimierung der Werte für die Wärmeleitfähigkeit sowie die Festigkeit gefunden worden.

Von besonderem Vorteil sind Abstandshalter, welche aus Titanblech oder einer Nickelbasislegierung mit mehr als 15 % Chromanteil hergestellt sind. Nickelbasislegierungen für diesen Zweck sind unter dem Handelsnamen Inconel auf dem Markt erhältlich. Als besonders vorteilhaft hat sich eine Nickelbasislegierung mit

50 - 55 % Nickel

17 - 21 % Chrom

2,8 - 3,3 % Molybdän

4,75 - 5,5 % Niob (+ Tantal)

sowie weitere geringfügige Anteile an Eisen, Titan, Kohlenstoff, Silizium, Kupfer, Kobalt, Aluminium, Mangan und Bor erwiesen. Eine solche Legierung ist unter dem Handelsnamen Inconel 718 erhältlich. Die Wärmeleitfähigkeit dieser Legierung liegt bei 11,4 W/m.K, ihre Zugfestigkeit liegt bei 1240 Mpa.

Weitere vorteilhafte Ausgestaltungen der Erfindung sind in den Unteransprüchen erfaßt.

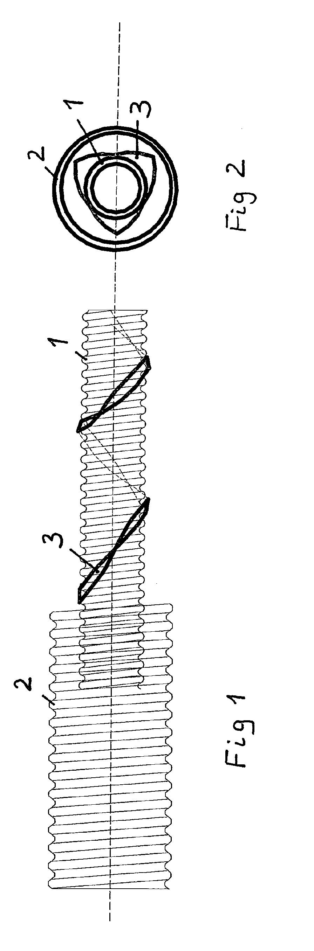

Die Erfindung ist anhand des in den Figuren 1 und 2 schematisch dargestellten Ausführungsbeispiele näher erläutert.

Die Figur 1 zeigt eine seitliche Ansicht eines Leitungsrohres nach der Lehre der Erfindung, wobei das Außenrohr gegenüber dem Innenrohr abgesetzt ist.

Die Figur 2 zeigt einen Schnitt durch das Leitungsrohr nach Fig. 1.

Das Leitungsrohr gemäß der Lehre der Erfindung besteht aus einem das kryogene Medium führenden Innenrohr 1 und einem das Innenrohr 1 konzentrisch umgebenden Außenrohr 2. Sowohl das Innenrohr 1 als auch das Außenrohr 2 sind metallische Wellrohre vorzugsweise aus nichtrostendem Stahl, die durch kontinuierliches Formen eines nahezu endlosen Metallbandes zu einem Schlitzrohr, Verschweißen des Längsschlitzes und Wellen des geschweißten Rohres hergestellt sind.

Der Abstand zwischen dem Innenrohr 1 und dem Außenrohr wird durch einen Abstandshalter 3 aufrechterhalten, der aus einem Metallbandstreifen besteht, welcher auf das Innenrohr 1 aufgewickelt ist und um seine Längsachse tordiert bzw. verdrillt ist. Durch die Tordierung bzw. Verdrillung des Abstandshalters 3 entstehen in Längsrichtung des Leitungsrohres gesehen Erhebungen des Abstandshalters 3, bei welcher der Abstandshalter mit seiner Schmalseite senkrecht auf dem Inennrohr 1 steht und dadurch den Abstand des Innenrohres 1 zum Außenrohr 2 vorgibt.

Der zwischen dem Innenrohr 1 und dem Außenrohr 2 befindliche Zwischenraum ist vorteilhafterweise evakuiert, um die Wärmeverluste zu reduzieren.

Der den Abstandshalter 3 bildende Metallbandstreifen ist hinsichtlich seiner Wärmeleitfähigkeit und Festigkeit optimiert.

So wird als Werkstoff für den Abstandshalter 3 Titan oder eine Nickelbasislegierung, die unter dem Handelsnamen Inconel 718 auf dem Markt erhältlich ist, verwendet. Diese Werkstoffe haben eine Wärmeleitfähigkeit von 22 bzw. 11.4 W/m.K. Die Festigkeit liegt für Titan im geglühten Zustand bei 230 - 460 Mpa und für Inconel 718 bei 1240 Mpa. Beide Werkstoffe sind auch über einen längeren Zeitraum gegenüber energiereicher Strahlung z. B. Nuklearstrahlung beständig, und ermöglichen den Einsatz des Leitungsrohres in der unmittelbaren Nähe von Atomreaktoren bzw. zum Transport von radioaktiven Medien.

Ein typisches Beispiel eines erfindungsgemäßen Leitungsrohres weist folgende Abmessungen auf:

| Innenrohr 1 | $D_A$ | 34 | = mm |
| | D, | 30 | = mm |
| | S | 0,3 | = mm |
| | Werkstoff | 1.4571 | (Edelstahl) |

| Außenrohr 2 $D_A$ | 44 | = mm |
| $D_i$ | 39 | = mm |
| S | 0,4 | = mm |
| Werkstoff | 1.4571 | (Edelstahl) |

| Abstandshalter 3 | | |
| Breite | 2 | = mm |
| Wanddicke | 0,2 | = mm |
| Schlaglänge | 200 | = mm |
| Werkstoff | | Titan |

**Patentansprüche**

1. Flexible Leitung zum Befördern von kryogenen Fließmedien, bestehend aus einem metallischen Innenrohr (1), einem schraubenlinienförmig auf das Innenrohr (1) gewickelten streifenförmigen Abstandshalter (3) aus einem Material geringer Wärmeleitfähigkeit sowie einem metallischen Außenrohr (2), wobei der Abstandshalter (3) sowohl das Innenrohr (1) als auch das Außenrohr (3) kontaktiert, **dadurch gekennzeichnet, daß** der streifenförmige Abstandshalter (3) um seine eigene Achse verdrillt ist und aus einem gegen energiereiche Strahlung beständigen Metall mit einer Wärmeleitfähigkeit von weniger als 25 W/m.K und einer Festigkeit von mehr als 240 Mpa besteht.

2. Flexible Leitung nach Anspruch 1, **dadurch gekennzeichnet, daß** der Abstandshalter (3) aus Titanblech besteht.

3. Flexible Leitung nach Anspruch 1, **dadurch gekennzeichnet, daß** der Abstandshalter (3) aus einer Nickelbasislegierung mit mehr als 15 % Gew% Chrom

4. Flexible Leitung nach einem der Ansprüche 1 bis 3, **dadurch gekennzeichnet, daß** die Breite des Abstandshalters (3) 0,1 - 0,3 D beträgt, wobei D der Außendurchmesser des Innenrohres (1) ist.

5. Flexible Leitung nach einem der Ansprüche 1 bis 4, **dadurch gekennzeichnet, daß** die Wanddicke des Abstandshalters (3) 0,01 - 0,03 D beträgt, wobei D der Außendurchmesser des Innenrohres (1) ist.

6. Flexible Leitung nach einem der Ansprüche 1 bis 5, **dadurch gekennzeichnet, daß** die Schlaglänge der Verdrillung zwischen 3D und 10 D liegt, wobei D der Außendurchmesser des Innenrohres (1) ist.

7. Flexible Leitung nach einem der Ansprüche 1 bis 6, **dadurch gekennzeichnet, daß** das Innenrohr (1) ein gewelltes Rohr aus rostfreiem Stahl ist.

8. Flexible Leitung nach einem der Ansprüche 1 bis 7, **dadurch gekennzeichnet, daß** das Außenrohr (2) ein gewelltes Rohr aus rostfreiem Stahl ist.

Fig 1

Fig 2

EP 1 482 236 A1

**Europäisches Patentamt**

**EUROPÄISCHER RECHERCHENBERICHT**

Nummer der Anmeldung

EP 04 29 0908

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GB 1 257 701 A (VACUUM BARRIER CORP.) 22. Dezember 1971 (1971-12-22) * Seite 2, linke Spalte, Zeile 32 – Zeile 41; Abbildungen * ----- | 1,7,8 | F16L59/14 F16L59/125 |
| A,D | DE 19 36 609 A (VACUUM BARRIER CORP) 12. Februar 1970 (1970-02-12) * Abbildungen * ----- | 1,7,8 | |
| A | FR 1 521 117 A (KABEL METALLWERKE GHH) 12. April 1968 (1968-04-12) * Abbildung * ----- | 1,7,8 | |
| A | GB 1 008 040 A (STORK & CO NV) 22. Oktober 1965 (1965-10-22) * Abbildungen * ----- | 1 | |

**RECHERCHIERTE SACHGEBIETE (Int.Cl.7)**

F16L

Der vorliegende Recherchenbericht wurde für alle Patentansprüche erstellt

| Recherchenort | Abschlußdatum der Recherche | Prüfer |
|---|---|---|
| Den Haag | 21. Juli 2004 | Budtz-Olsen, A |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie,übereinstimmendes
   Dokument

EPO FORM 1503 03 82 (P04C03)

**ANHANG ZUM EUROPÄISCHEN RECHERCHENBERICHT**
**ÜBER DIE EUROPÄISCHE PATENTANMELDUNG NR.**          EP 04 29 0908

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-07-2004

| Im Recherchenbericht angeführtes Patentdokument | | Datum der Veröffentlichung | Mitglied(er) der Patentfamilie | | Datum der Veröffentlichung |
|---|---|---|---|---|---|
| GB 1257701 | A | 22-12-1971 | BE | 726941 A | 15-07-1969 |
| | | | CH | 498331 A | 31-10-1970 |
| | | | DE | 1901069 A1 | 04-09-1969 |
| | | | FR | 2000268 A5 | 05-09-1969 |
| | | | JP | 49008963 B | 01-03-1974 |
| | | | NL | 6900406 A ,C | 17-07-1969 |
| | | | SE | 344233 B | 04-04-1972 |
| | | | US | 3490496 A | 20-01-1970 |
| DE 1936609 | A | 12-02-1970 | BE | 736524 A | 31-12-1969 |
| | | | CH | 530582 A | 15-11-1972 |
| | | | DE | 1936609 A1 | 12-02-1970 |
| | | | FR | 2013626 A5 | 03-04-1970 |
| | | | GB | 1274285 A | 17-05-1972 |
| | | | NL | 6911275 A ,C | 27-01-1970 |
| | | | SE | 353783 B | 12-02-1973 |
| | | | US | 3565118 A | 23-02-1971 |
| FR 1521117 | A | 12-04-1968 | DE | 1525658 A1 | 20-11-1969 |
| | | | AT | 281518 B | 25-05-1970 |
| | | | BE | 698628 A | 03-11-1967 |
| | | | CH | 451621 A | 15-05-1968 |
| | | | DK | 123185 B | 23-05-1972 |
| | | | ES | 339904 A1 | 16-05-1968 |
| | | | GB | 1160013 A | 30-07-1969 |
| | | | NL | 6707559 A | 04-12-1967 |
| | | | SE | 338472 B | 06-09-1971 |
| | | | US | 3473575 A | 21-10-1969 |
| | | | YU | 89667 A ,B | 28-02-1973 |
| GB 1008040 | A | 22-10-1965 | KEINE | | |

EPO FORM P0461

Für nähere Einzelheiten zu diesem Anhang : siehe Amtsblatt des Europäischen Patentamts, Nr.12/82